# EUROPEAN PATENT APPLICATION

(11) **EP 4 703 247 A1**
(43) Date of publication of application: **04.03.2026**
(21) Application number: 25180238.5
(22) Date of filing: 02.06.2025
(51) Int. Cl.: B62J 1/08, B62J 9/23

(54) **SCOOTER**

(30) Priority: 03.09.2024 CN 202422163808 U
(71) Applicant: 3KM Pte. Ltd, Singapore 199591 (SG)
(72) Inventor: WANG, Qibiao, 199591 Singapore (SG); XIAO, Ziqiu, 199591 Singapore (SG)
(74) Representative: Fuchs Patentanwälte Partnerschaft mbB

(57) **Abstract**

The present disclosure provides a scooter including a body, a seat assembly, a front wheel assembly, and a rear wheel assembly. The body is rotatably connected with the front wheel assembly and the rear wheel assembly and includes a deck, a support part, and a seat tube. The seat assembly includes a seat, the support part is connected with the deck and protrudes from the deck; the seat tube is connected with the support part and the seat assembly; the deck includes a bearing surface for a driver to put the feet thereon; an accommodating space is formed between the seat assembly and the bearing surface such that at least one foot is always below the seat when the driver drives by sitting on the seat or standing on the bearing surface. The scooter provided in the present disclosure can overcome the problem of a driver being allowed to drive with a single driving posture due to limited functions of an existing short-distance transportation vehicle.

## Description

### TECHNICAL FIELD

The present disclosure relates to the technical field of vehicles, and in particular, to a scooter.

### BACKGROUND

With the development of science and technology, various transportation vehicles have come out, bringing great convenience for people's life. Especially, short-distance transportation vehicles have been increasingly used, such as scooters and self-balancing vehicles. These short-distance transportation vehicles can be driven by people standing thereon, are small and portable, are suitable for traveling through narrow spaces, and have advantages in ultra-short distance traveling. The short-distance transportation vehicles in the existing technology tend to be simple in structure with quite limited functions, and drivers can only drive them by way of standing thereon with a single driving posture.

Therefore, there is a need for a short-distance transportation vehicle which allows a driver to drive in different driving postures while keeping a small size of the vehicle.

The content in the background section is merely information known to the inventors, and neither represents that the above information has been found in the public field prior to the filing date of the present disclosure nor represents that it can become the prior art of the present disclosure.

### SUMMARY

The present disclosure provides a scooter to solve the problems in the related art.

The present disclosure provides a scooter including a body, a seat assembly, a front wheel assembly, and a rear wheel assembly. The body is rotatably connected with the front wheel assembly and the rear wheel assembly and includes a deck, a support part, and a seat tube. The seat assembly includes a seat. The support part is connected with the deck and protrudes from the deck. The seat tube is connected with the support part and the seat assembly. The deck includes a bearing surface for a driver to put the feet thereon. An accommodating space is formed between the seat assembly and the bearing surface such that at least one foot is always below the seat when the driver drives by sitting on the seat or standing on the bearing surface.

In some embodiments, the support part is tilted from the bearing surface in an obliquely backward direction relative to the scooter.

In some embodiments, the support part includes a connecting surface. The seat tube is connected with the connecting surface, and when the scooter is placed on a horizontal plane, the seat tube extends from the connecting surface in a forward and upward direction relative to the scooter.

In some embodiments, there is an obtuse angle between the connecting surface and the bearing surface such that the connecting surface is oriented in the forward and upward direction relative to the scooter when the scooter is placed horizontally.

In some embodiments, an instantly detachable structure is disposed on the connecting surface, and the seat tube is connected with the connecting surface by means of the instantly detachable structure. Alternatively, the connecting surface is integrally molded with the seat tube.

In some embodiments, the seat assembly includes a seat post. The seat post is connected with the seat and the seat tube. The seat includes a front portion which is located in front of the seat post and over the bearing surface. A ratio of a projection length of the front portion on the bearing surface to a length of the bearing surface along a length direction of the bearing surface is 0.2 to 0.4.

In some embodiments, the seat tube is provided with a mounting hole having an opening oriented in a backward and upward direction relative to the scooter, and the seat post is at least partially disposed within the mounting hole.

In some embodiments, the seat post further includes a locking element. The locking element is disposed at the opening of the mounting hole, and the seat post is detachably fixed within the mounting hole so that the driver can adjust a height of the seat.

In some embodiments, the seat assembly includes a seat post which is connected with the seat and the seat tube. The seat includes a rear portion. The rear portion is located behind the seat post, and a mounting space for disposing an accessory of the scooter is formed between the rear portion and the seat tube.

In some embodiments, the accessory includes a storage member which is at least partially located in the mounting space.

In some embodiments, the storage member includes a sidewall and a bottom, where the seat tube is connected with the sidewall, and the support part is connected with the bottom to support the storage member from thereunder.

In some embodiments, the support part includes a support surface, where the support surface is horizontal when the scooter is placed horizontally. Moreover, the support part is connected with the bottom by means of the support surface.

In some embodiments, a limiting groove is formed in the sidewall, and the seat tube is at least partially located within the limiting groove.

In some embodiments, a first connecting hole communicating with the limiting groove is formed in the sidewall, and a second connecting hole is formed in a portion of the seat tube that is located within the limiting groove. The scooter includes an externally threaded element which passes through the first connecting hole and the second connecting hole to connect the storage member and the seat tube.

To sum up, the scooter according to the present disclosure is provided with the seat assembly so that a driver can drive the scooter by either standing on the bearing surface or sitting on the seat assembly. The seat assembly may be at least partially disposed right above the bearing surface so that the accommodating space can be formed between the seat assembly and the bearing surface. This is conducive to reducing a longitudinal size of the scooter. When the driver drives the scooter by sitting on the seat assembly or standing on the bearing surface, the driver may put one or both feet within the accommodating space and get close to the support part. The seat tube and the seat assembly may avoid (blocking) the bearing surface. This is conducive to providing enough space on the deck for receiving the feet of the driver such that the driver can adjust the posture of the legs more easily when driving the scooter.

Other functions of the scooter provided in the present disclosure will be enumerated in part in the following description. According to the description, the contents presented by reference numerals and examples will be apparent to a person of ordinary skill in the art. Creative aspects of the scooter provided in the present disclosure may be fully understood by practice or by using the methods, devices, and combinations described in the following detailed examples.

### BRIEF DESCRIPTION OF THE DRAWINGS

To describe the technical solutions in the embodiments of the present application more clearly, the accompanying drawings for describing the embodiments are briefly described below. Apparently, the accompanying drawings in the following description show merely some embodiments of the present application, and a person of ordinary skill in the art may derive other drawings from these accompanying drawings without creative efforts.
FIG. 1 illustrates a front structural schematic diagram of a scooter provided according to an embodiment of the present disclosure;
FIG. 2 illustrates a perspective structural schematic diagram of a scooter provided according to an embodiment of the present disclosure;
FIG. 3 illustrates a partial exploded structural schematic diagram of a scooter provided according to an embodiment of the present disclosure; and
FIG. 4 illustrates a partial structural schematic diagram of a scooter provided according to an embodiment of the present disclosure.

### DETAILED DESCRIPTION OF THE EMBODIMENTS

The following description provides specific application scenarios and requirements of this specification, with the purpose of enabling those skilled in the art to make and use the content in this specification. For those skilled in the art, various partial modifications to the disclosed embodiments are obvious, and without departing from the spirit and scope of this specification, the general principles defined herein can be applied to other embodiments and application. Therefore, the specification is not limited to the embodiments, but is the consistent with the widest scope of claims.

The terms used herein are merely intended to describe specific examples or embodiments, rather than to limit the present disclosure. For example, unless expressly stated otherwise, the singular forms "a", "an" and "this" used herein may also include plural forms. In the present disclosure, the terms "include" and/or "comprise" refer to the existence of an associated integer, step, operation, element, component and/or group, without excluding the existence of one or more other features, integers, steps, operations, elements, components and/or groups. In other words, other features, integers, steps, operations, elements, components and/or groups may be added to the system/method.

In consideration of the following description, in the present disclosure, these and other features, the operations and functions of related elements of the structure, as well as the economic efficiency of the combination and manufacturing of components can be significantly improved. With reference to the drawings, all of these form part of the present disclosure. However, it should be clearly understood that the drawings are merely intended for illustration and description purposes, rather than to limit the scope of the present disclosure. It should be understood that the accompanying drawings are not drawn to scale.

The flowchart used in the present disclosure illustrates the operations implemented by the system according to some embodiments in the present disclosure. It should be clearly understood that the operations of the flowchart may be implemented out of sequence. Instead, operations may be implemented in reverse sequence or simultaneously. In addition, one or more other operations may be added to the flowchart. One or more operations may be removed from the flowchart.

In the present disclosure, "X includes at least one of A, B, or C" means X includes at least A, X includes at least B, or X includes at least C. In other words, X may include only one of A, B, and C, or include any combination of A, B, and C and other possible content/element. The any combination of A, B, and C may be A, B, C, AB, AC, BC, or ABC.

In the present disclosure, unless otherwise explicitly specified, an association relationship between structures may be a direct association relationship or an indirect association relationship. For example, for the description "A is connected to B", unless it is explicitly described that A is directly connected to B, it will be construed as that A may be directly connected to B or indirectly connected to B. For another example, for the description "A is over B", unless it is explicitly described that A is directly above B (A and B are adjacent and A is above B), it will be construed as that A may be directly above B, or A may be indirectly over B (A and B are spaced apart by other element and A is above B), and so on.

The short-distance transportation vehicles in the existing technology tend to be simple in structure with limited functions, and drivers can only drive them by standing thereon with a single driving posture. Therefore, there is a need for a short-distance transportation vehicle which allows a driver to drive with different driving postures while keeping a small size of the vehicle.

In the present disclosure, the short-distance transportation vehicle refers to various devices and tools for meeting individuals' transportation demands within a relatively short distance range. Such devices typically have portability, maneuverability, and environmental friendliness, are suitable for short distance traveling in cities or specific areas, and can effectively replace or supplement traditional vehicles, thereby reducing traffic congestion and the environmental pollution. Specific examples of personal traveling devices include scooters, electric scooters, electric self-balancing vehicles, and other similar light vehicles. The present disclosure describes the above-mentioned short-distance transportation vehicle by taking a scooter as an example. However, it can be understood by a person skilled in the art that other types of short-distance transportation vehicles are also applicable to the present disclosure without departing from the spirit thereof.

The scooter provided in the present disclosure includes a seat assembly, so that a driver can drive the scooter by standing on a bearing surface or sitting on the seat assembly. The seat assembly may be at least partially disposed right above the bearing surface so that an accommodating space can be formed between the seat assembly and the bearing surface. This is conducive to reducing the size of the scooter in a longitudinal direction L. The longitudinal direction L is a direction from the seat assembly to the front wheel assembly. When the driver drives the scooter by sitting on the seat assembly or standing on the bearing surface, the driver may put one or both feet into the accommodating space and get close to the support part. The seat tube and the seat assembly may avoid the bearing surface. This is conducive to providing enough space for the deck to receive the feet of the driver, such that the driver may adjust the posture of the legs more easily when driving the scooter.

The scooter provided in the present disclosure may be a short-distance transportation scooter, such as a tricycle or a bicycle. In particular, the scooter has a small dimension in a width direction thereof. The width direction of the scooter may be an axial direction of a wheel of the scooter. That is to say, the bearing surface of the scooter has a small width dimension. For example, the bearing surface can only allow one foot to be put thereon such that the driver needs to put two feet on the bearing surface with one behind the other. In addition, the scooter has a small wheel track. This results in a small size and a low weight of the scooter so that the scooter can be very suitable for short distance traveling.

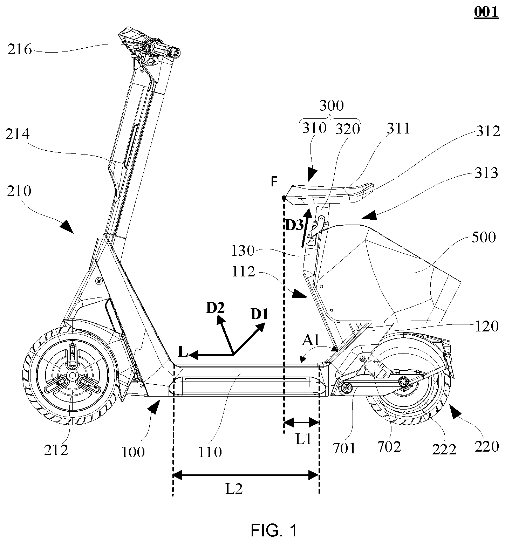

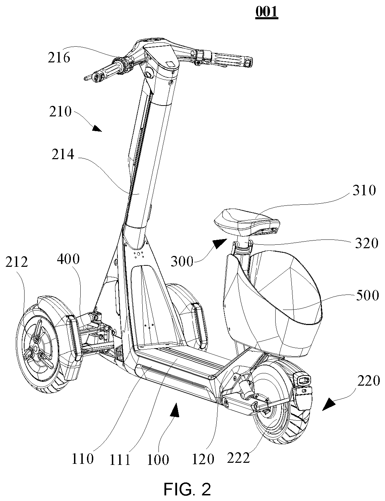

FIG. 1 illustrates a front structural schematic diagram of a scooter provided according to an embodiment of the present disclosure. FIG. 2 illustrates a perspective structural schematic diagram of a scooter provided according to an embodiment of the present disclosure. As shown in FIG. 1 and FIG. 2, the scooter 001 includes a body 100, a seat assembly 300, a front wheel assembly 210, and a rear wheel assembly 220. The body 100 is rotatably connected with the front wheel assembly 210 and the rear wheel assembly 220. At least one of the front wheel assembly 210 and the rear wheel assembly 220 may be driven to rotate relative to the body 100, thereby driving the scooter 001 to travel in an application scenario.

The body 100 may be a base and main body structure of the scooter 001. The body 100 may be configured to connect various parts of the scooter 001, such as the front wheel assembly 210 and the rear wheel assembly 220. The body 100 may be further configured to carry a driver. The body 100 may have various structures to adapt to different application scenarios. For example, the scooter 001 may be a tricycle or a bicycle, where the bodies 100 of the tricycle or the bicycle may have different structures. FIG. 1 in the present disclosure is described by taking a three-wheeled scooter as an example. A person skilled in the art can understand that other structures of the body 100 also fall into the protection scope of the present disclosure. The body 100 may be made of a metal material, such as a carbon steel material, an aluminum alloy material, or a titanium alloy material. The body 100 may also be made of a carbon fiber material. The body 100 may also be made of a combination of different materials, which is not limited herein. In some embodiments, the body 100 may also include other parts, which is not limited herein.

The front wheel assembly 210 and the rear wheel assembly 220 may be distributed along a longitudinal direction L of the body 100. The longitudinal direction L is a direction from the seat assembly 300 to the front wheel assembly 210. The longitudinal direction L may be a traveling direction of the body 100. The front wheel assembly 210 may at least include a steering assembly 216, a head tube 214, and at least one front wheel 212. The rear wheel assembly 220 may include at least one rear wheel 222. In some embodiments, the front wheel assembly 210 may include one wheel or a pair of wheels. In some other embodiments, the rear wheel assembly 220 may include one wheel or a pair of wheels. The wheel may include an inflatable tire, or a solid rubber tire, which is not limited herein.

The scooter 001 as shown in FIG. 1 is described by taking as an example that the front wheel assembly 210 includes a pair of front wheels 212 and the rear wheel assembly 220 includes one rear wheel 222. The front wheel 212 is rotatably connected with the head tube 214. The body 100 is rotatably connected with the front wheel assembly 210 by means of the head tube 214. The front wheel 212 and the rear wheel 222 may be a moving part of the scooter 001. At least one of the front wheel 212 and the rear wheel 222 may be driven to rotate relative to the body 100, thereby driving the scooter 001 to travel. The front wheel 212 and the rear wheel 222 may be connected with the body 100 to drive the body 100 to travel.

In some embodiments, a pair of wheels may include a first wheel and a second wheel. The first wheel and the second wheel may be located on two sides of the body 100, respectively, so that the body 100 can stand without a kick stand. Further, the first wheel and the second wheel may be symmetrically distributed on two sides of the body 100.

In some embodiments, the front wheel assembly 210 may include a suspension system 400. The suspension system 400 is connected to the two wheels 212 and the head tube 214 of the scooter 001. That is to say, the wheel 212 may also be connected with the body 100 by means of the suspension system 400. The suspension system 400 may also be a generic term for all force transfer connection elements between the body 100 and the wheel. The role of the suspension system is to transfer a force and a torque between the body 100 and the wheel. The suspension system 400 may also buffer an impact caused by an uneven road to the body 100 and reduce the resulting shaking so as to ensure that the scooter 001 can travel smoothly.

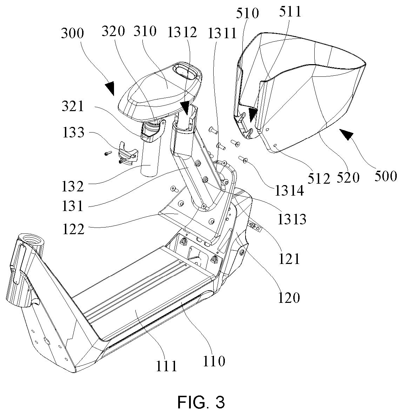

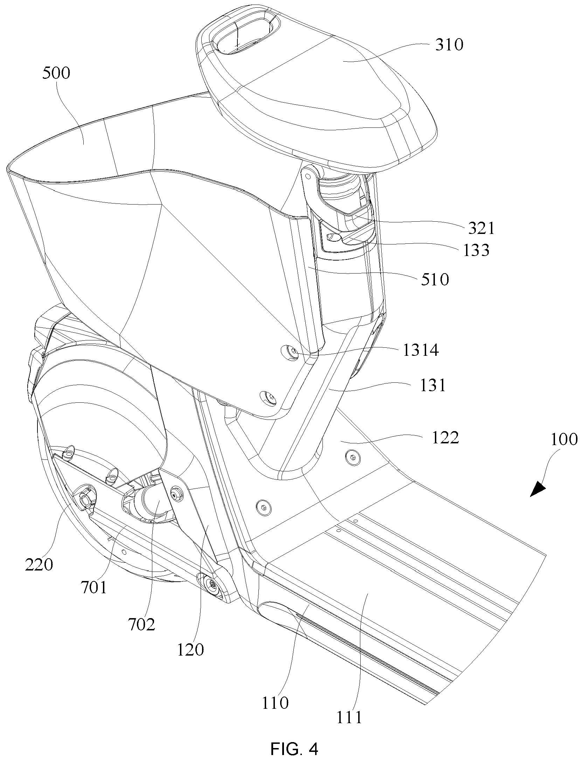

FIG. 3 illustrates a partial exploded structural schematic diagram of a scooter provided according to an embodiment of the present disclosure. FIG. 4 illustrates a partial structural schematic diagram of a scooter provided according to an embodiment of the present disclosure. As shown in FIG. 1 to FIG. 4, the seat assembly 300 includes a seat 310 and a seat post 320. The body 100 includes a deck 110, a support part 120, and a seat tube 130. The support part 120 is connected with the deck 110 and protrudes from the deck 110. The seat tube 130 is connected with the support part 120 and the seat assembly 300. The deck 110 includes a bearing surface 111 for a driver to step thereon. An accommodating space 112 is formed between the seat assembly 300 and the bearing surface 111 such that at least one foot is always below the seat 310 when the driver drives by sitting on the seat 310 or standing on the bearing surface 111. As a matter of course, part of legs of the driver may also be put below the seat 310 along with the feet.

The deck 110 may be configured to carry both feet of the driver. The driver may drive the scooter 001 by standing on the bearing surface 111. In some embodiments of the present disclosure, a width of the deck 110 and/or the bearing surface 111 is only sufficient to receive one foot, thus both feet cannot be placed in parallel in the width direction. Accordingly, the driver needs to put both feet on the bearing surface with one behind the other. The driver may also drive the scooter 001 by sitting on the seat assembly 300. When the driver drives the scooter 001 by sitting on the seat assembly 300, the driver may put both feet on the bearing surface 111. Further, the driver may also put one or both feet into the accommodating space 112 and get close to the support part 120 to fit a sitting posture. When the driver drives the scooter 001 by standing on the bearing surface 111, the driver may also put one foot into the accommodating space 112 and get close to the support part 120 to fit a standing posture.

The seat assembly 300 may be at least partially disposed right above the bearing surface 111 so that the accommodating space 112 can be formed between the seat assembly 300 and the bearing surface 111. This is conducive to reducing a dimension of the scooter 001 in the longitudinal direction L. The seat tube 130 is connected between the support part 120 and the seat assembly 300 so that the seat tube 130 and the seat assembly 300 may avoid the bearing surface 111. This is conducive to providing enough space on the deck 110 for receiving the feet of the driver such that the driver can adjust leg positions more easily when driving the scooter 001.

In some embodiments, as shown in FIG. 1, a front end of the body 100 is pivotably/rotatably connected with the steering assembly 216 along the traveling direction of the scooter 001. The support part 120 is disposed at a rear end of the body 100. The deck 110 is disposed between the steering assembly 216 and the support part 120. The driver may maintain balance by holding the steering assembly 216. The driver may also control the scooter 001 with the steering assembly 216. For example, the steering assembly 216 may be provided as a handle bar or a steering wheel.

There may be enough space above the deck 110 to allow the driver to stand comfortably on the bearing surface 111 so that the driver can adjust the leg position when driving the scooter 001. Meanwhile, since the driver needs to hold the steering assembly 216 with hands, a distance between the seat assembly 300 and the steering assembly 216 should not be too long to enable the driver to hold the steering assembly 216 with hands while sitting on the seat assembly 300. Therefore, a dimension of the deck 110 along the longitudinal direction L of the scooter 001 may be limited. Thus, since the seat assembly 300 is at least partially disposed right above the bearing surface 111, the distance between the seat assembly 300 and the steering assembly 216 can be shortened on the one hand, and on the other hand, enough accommodating space 112 can be formed between the seat assembly 300 and the bearing surface 111 to allow the driver to comfortably stand on the bearing surface 111.

The position of the deck 110 is relatively low such that the driver can maintain a low center of gravity when driving the scooter 001. The support part 120 protrudes from the deck 110 so that the support part 120 can have a large dimension along the height direction of the scooter 001, facilitating connection of the support part 120 with other components.

In some embodiments, the body 100 is rotatably connected with the rear wheel assembly 220. Further, the body 100 of the scooter 001 may further include a first connecting piece 701 and a second connecting piece 702. The first connecting piece 701 is rotatably connected with the deck 110. For example, the first connecting piece 701 is pivotably connected with the support part 120. The first connecting piece 701 is further rotatably connected with the wheel 222 of the rear wheel assembly 220. Meanwhile, the second connecting piece 702 is rotatably connected with the deck 110 and/or the support part 120. For example, the second connecting piece 702 is rotatably connected with the support part 120. Therefore, the first connecting piece 701, the second connecting piece 702, and the deck 110 form a triangular support structure. Further, the second connecting piece 702 may be an elastic piece. For example, the second connecting piece 702 is a shock absorber including a spring, which can expand and contract elastically. Therefore, the first connecting piece 701, the second connecting piece 702, and the support part 120 may form a slider-crank structure. With the elastic second connecting piece 702, the rear wheel assembly 220 can sway relative to the body 100, thereby achieving a shock absorption effect when the scooter 001 travels on an uneven road to ensure smooth traveling.

In some embodiments, as shown in FIG. 1 to FIG. 4, the support part 120 is tilted from the bearing surface 111 in an obliquely backward direction (direction D1) relative to the scooter 001. Herein, the obliquely backward direction D1 refers to a direction that is inclined relative to the ground and points towards the rear wheel 222 and the sky when the scooter 001 is parked on the ground. As shown in FIG. 1, the direction D1 forms an obtuse angle with the longitudinal direction L of the body.

The support part 120 is designed so that it does not occupy space above the bearing surface 111, allowing the driver's feet to have ample room above the surface. Additionally, it ensures a smooth, obtuse-angle transition between the deck 110 and the support part 120, providing space above a part of the support part 120 that is near the deck 110 for the driver to place their feet..

In some embodiments, as shown in FIG. 1 to FIG. 4, the support part 120 includes a connecting surface 122. The support part may further include a support surface 121. The connecting surface 122 is configured to connect to the seat tube 130. The support surface may support an accessory, e.g., a storage member 500, of the scooter 001. According to some embodiments of the present disclosure, the support surface 121 is horizontal or approximatively horizontal when the scooter 001 is placed horizontally.

Next, the connecting surface 122 will be described in detail herein.

In some embodiments, as shown in FIG. 1 to FIG. 4, there is an obtuse angle A1 between the connecting surface 122 and the bearing surface 111 such that the connecting surface 122 is oriented in the forward and upward direction relative to the scooter 001 when the scooter 001 is placed horizontally. For example, the angle A1 between the connecting surface 122 and the bearing surface 111 ranges from 120° to 125° or from 130° to 145°.

The connecting surface 122 is disposed in such a way that the seat tube 130 is disposed on the connecting surface 122; in addition, the connecting surface 122 is in smooth transition with the bearing surface 111 at the joint, thereby providing space above the portion of the connecting surface 122 close to the bearing surface 111 for receiving the feet of the driver.

In some embodiments, an instantly detachable structure is disposed on the connecting surface 122. The seat tube 130 is connected with the connecting surface 122 by an instantly detachable structure. For example, the seat tube 130 may be connected with the connecting surface 122 by means of a clamping groove structure. When the driver does not need to sit on the seat assembly 300, the seat tube 130 and the seat assembly 300 can be detached together from the connecting surface 122 conveniently such that the driver can drive in a standing position. In some embodiments, a detachable structure of other ways is disposed on the connecting surface 122. The seat tube 130 is connected with the connecting surface 122 by means of this structure. For example, the seat tube 130 may be connected with the connecting surface 122 by means of a screw, or the like.

In some other embodiments, as shown in FIG. 1 to FIG. 4, the connecting surface 122 and the seat tube 130 may also be integrally molded. In this case, the seat tube 130 protrudes from the connecting surface 122. For example, the connecting surface 122 and the seat tube 130 are integrally molded by forging and pressing. The connecting surface 122 is connected with the seat tube 130 in such a way that the manufacturing process can be simplified and convenient assembly can be achieved. Furthermore, joint marks on the surface of the scooter 001 are reduced and the appearance is improved.

In some embodiments, the connecting surface 122 may also be connected to other parts of the body 100. For example, the connecting surface 122 may be connected to other components of the body 100 by means of a hook and a small container. Other parts include some of a helmet, gloves, knee and elbow pads, a rain gear, a mobile phone holder, a tire repair tool, a charger, an emergency power supply, and a lock.

The seat tube 130 is connected with the connecting surface 122, and when the scooter 001 is placed horizontally, the seat tube 130 extends from the connecting surface 122 in a forward and upward direction D2 relative to the scooter 001.

Specifically, a lower end of the seat tube 130 is connected with the connecting surface 122 and an upper end of the seat tube 130 is connected with the seat assembly 300 such that the seat tube 130 forms support for the seat assembly 300. In some embodiments, an upper end of the seat tube 130 may extend to a position above the bearing surface 111 such that the seat assembly 300 is supported above the bearing surface 111. In some other embodiments, the upper end of the seat tube 130 may extend to a position above the support part 120. The seat assembly 300 extends forwards from the position above the support part 120 to the position above the bearing surface 111.

The seat tube 130 is disposed in such a way that the seat assembly 300 can be supported above the bearing surface 111; additionally, space can be provided between the seat tube 130 and the support part 120 for receiving the feet of the driver. Moreover, a mounting space 313 may be formed above the seat tube 130, allowing an accessory of the scooter 001 to be provided above the seat tube 130 to take full advantage of the space of the scooter 001, resulting in a compact design of the scooter 001.

The upper end of the seat tube 130 is connected with the seat assembly 300. In some embodiments, the seat assembly 300 includes a seat post 320 and a seat 310.

The seat post 320 is connected with the seat 310, and also connected with the seat tube 130. In some embodiments, as shown in FIG. 1 to FIG. 4, the seat tube 130 is provided with a mounting hole 1312 having an opening oriented in a backward and upward direction relative to the scooter 001, and the seat post 320 is at least partially disposed in the mounting hole 1312. In FIG. 1, an opening direction of the mounting hole 1312 may be denoted as D3. The provision of the mounting hole 1312 is conducive to stabilizing and fixing the seat post 320, and meanwhile, facilitating the assembly of the seat post 320 on the seat tube 130.

The driver may adjust the position of the seat post 320 in the backward and upward direction relative to the scooter 001 along the opening direction D3 of the mounting hole 1312 to increase a spacing distance between the seat 310 and the deck 110 and also increase a spacing distance between the seat 310 and the front end of the body 100. The driver may also adjust the seat post 320 in a forward and downward direction relative to the scooter 001 to reduce the spacing distance between the seat 310 and the deck 110 and also reduce the spacing distance between the seat 310 and the front end of the body 100.

In some embodiments, as shown in FIG. 1 to FIG. 4, the seat post 320 further includes a locking element 321. The locking element 321 is disposed at the opening of the mounting hole 1312, and the seat post 320 is detachably fixed in the mounting hole 1312 so that the driver can adjust the height of the seat 310. The locking element 321 helps rapidly adjust the position of the seat post 320 so that the height of the seat 310 can be adjusted rapidly. The driver may release the locking element 321 to allow the seat post 320 to slide toward the mounting hole 1312 so that the height of the seat 310 can be adjusted rapidly. The driver may lock the locking element 321 to limit the seat post 320 from sliding within the mounting hole 1312 so that the position of the seat 310 can be maintained.

In some embodiments, as shown in FIG. 1 to FIG. 4, the seat tube 130 includes a seat tube body 131, a mounting tube 132, and a fixing element 133. The mounting hole 1312 may be disposed on the seat tube body 131. The opening of the mounting hole 1312 may be located at an upper end of the seat tube body 131, and a lower end of the seat tube body 131 may be connected with the connecting surface 122. A lower end of the mounting tube 132 may be located within the mounting hole 1312. A portion of the mounting tube 132 between the upper and lower ends may be clamped between the fixing element 133 and the seat tube body 131. The fixing element 133 may be connected with the seat tube body 131 by means of a screw such that the mounting tube 132 is fixed to the seat tube body 131 to realize assembly of the mounting tube 132 on the seat tube body 131. The seat post 320 may extend, from the upper end of the mounting tube 132, through the mounting tube 132 into the mounting hole 1312. The provision of the mounting tube 132 is conducive to mounting the seat post 320 on the seat tube 130.

The seat 310 includes a front portion 311 and a rear portion 312.

In some embodiments, the front portion 311 of the seat 310 is located in front of the seat post 320 (on the side close to the front wheel 212) and on the bearing surface 111. A ratio of a projection length L1 of the front portion 311 on the bearing surface 111 to a total length L2 of the bearing surface 111 along a length direction L of the bearing surface 111 is 0.2 to 0.4. For example, L1:L2 is 0.22 to 0.25, 0.28 to 0.32, or 0.35 to 0.38. The length direction L of the bearing surface 111 is parallel to the traveling direction of the scooter 001.

The length of L1 should conform to the ergonomics. That is to say, when the driver stands on the deck 110, the driver may hold the steering assembly 216 in a natural and comfortable way. In this case, L1:L2 should be kept at an appropriate value such that the driver feels comfortable when sitting and standing on the scooter. For example, in some embodiments, as shown in FIG. 1, the length L2 of the bearing surface 111 is 410 mm to 460 mm. The projection length L1 of the front portion 311 on the bearing surface 111 is 90 mm to 110 mm. A value of L1:L2 is set to in a range of 0.2 to 0.4 so that the accommodating space 112 can be enough for receiving the feet of the driver. This is also conducive to taking full advantage of the space to reduce the size of the scooter 001.

When the value of L1:L2 is small, it means that a point F of the front end of the seat 310 is closer to the rear wheel 222 and far away from the steering assembly 216. This means that while the restriction of the seat 310 to the legs of the driver is reduced, the seat 310 is further away from the steering assembly 216. The driver may feel uncomfortable to hold the steering assembly 216 when sitting on the seat 310. When the value of L1:L2 is large, it means that the point F of the front end of the seat 310 is closer to the steering assembly 216. This means that while the driver may feel more comfortable to hold the steering assembly 216 when sitting on the seat 310, but the driver may feel uncomfortable when driving by standing because the proportion of L1 in L2 is greater and the restriction of the seat 310 to the legs of the driver is increased.

The rear portion 312 of the seat 310 is located behind the seat post 320 (on the side close to the rear wheel 222), and the mounting space 313 is formed between the rear portion and the seat tube 130. The mounting space 313 may be used for mounting an accessory of the scooter 001. For example, the accessory of the scooter 001 may include one or more of a helmet, gloves, knee and elbow pads, a rain gear, a mobile phone holder, a tyre repair tool, a charger, an emergency power supply, and a lock.

The mounting space 313 is located below the rear portion 312 of the seat. The mounting space 313 is provided such that the space of the scooter 001 can be fully utilized, resulting in a compact design of the scooter 001. This is conducive to reducing the overall size of the scooter 001.

In some embodiments, the scooter 001 may further include an accessory 500. As shown in FIG. 1 to FIG. 4, the accessory includes a storage member 500 which is at least partially located in the mounting space 313. The storage member 500 may be configured to store articles. For example, the storage member 500 may be configured to store other accessories. The storage member 500 may be specifically a basket or a storage box, etc.

The storage member 500 may be connected and fixed with the seat tube 130. As shown in FIG. 1 to FIG. 4, the storage member 500 includes a sidewall 510 and a bottom 520, where the seat tube 130 is connected with the sidewall 510, and the support part 120 is connected with the bottom 520 to support the storage member 500 from below.

A supporting role of the support part 120 to the storage member 500 may resist the gravity of an article(s) stored in the storage member 500 so that an acting force between the storage member 500 and the body 100 can be reduced. When the storage member 500 holds a heavy article, the risk of breakage of the storage member 500 can be reduced and the connection stability of the storage member 500 with the body 100 can be improved. Thus, the application scenarios of the storage member 500 can be wide.

The bottom of the storage member 500 is connected with the support surface 121. That is, the support surface 121 supports the storage member 500 from below. The bottom 520 of the storage member 500 may also be provided as a flat surface so as to hold articles and to be supported by the support surface 121.

In some embodiments, a limiting groove 511 is formed in the sidewall 510, and the seat tube 130 is at least partially located within the limiting groove 511. Further, the seat tube 130 includes a mating surface 1311 which is located within the limiting groove 511. The limiting groove 511 matches a shape of the mating surface 1311. That is to say, the sidewall 510 may enclose at least part of the seat tube 130 so that the connection and fixation effect of the sidewall 510 and the seat tube 130 can be improved.

In some embodiments, a first connecting hole 512 communicating with the limiting groove 511 is formed in the sidewall 510, and a second connecting hole 1313 is formed in a portion of the seat tube 130 that is located within the limiting groove 511. The scooter 001 includes an externally threaded element 1314 which passes through the first connecting hole 512 and the second connecting hole 1313 to connect the storage member 500 and the seat tube 130.

The externally threaded element 1314 may include a screw, a bolt, or the like. The storage member 500 and the seat tube 130 are connected in such a way that the driver can be allowed to mount and dismount the storage member 500 as needed, thereby being conducive to using the scooter 001 in more application scenarios.

In some embodiments, a front end of the storage member 500 may be located in the mounting space 313. A portion of the storage member 500 between the front and rear ends may be connected to the support surface 121. The rear end of the storage member 500 may be located above the rear wheel assembly 220. The storage member 500 is disposed in such a way that the space above the rear wheel assembly 220 can be utilized to increase the accommodating volume of the storage member 500, thereby being conducive to reducing the overall dimensions of the scooter 001.

To sum up, the scooter 001 provided in the present disclosure allows a driver to drive the scooter 001 by standing on the bearing surface 111 or by sitting on the seat assembly 300. The seat assembly 300 may be at least partially disposed right above the bearing surface 111 so that the accommodating space 112 can be formed between the seat assembly 300 and the bearing surface 111. This is conducive to reducing the longitudinal dimension of the scooter 001. When the driver drives the scooter 001 by sitting on the seat assembly 300 or standing on the bearing surface 111, the driver may put one or both feet into the accommodating space 112 and get close to the support part 120. The seat tube 130 and the seat assembly 300 may avoid the bearing surface 111. This is conducive to providing enough space on the deck 110 for receiving the feet of the driver such that the driver may adjust leg positions more easily when driving the scooter 001.

The foregoing describes the specific embodiments of the present disclosure. Other embodiments fall within the scope of the appended claims. In some cases, the actions or steps described in the claims may be performed in sequences different from those in the embodiments and still achieve expected results. In addition, the processes depicted in the accompanying drawings do not necessarily require the specific orders or sequential orders shown for achieving the expected results. In some implementations, multitasking and parallel processing are also possible or may be advantageous.

In summary, after reading this detailed disclosure, those skilled in the art can understand that the foregoing detailed disclosure may be presented by way of example only, and may not be limited. Although there is no clear description, those skilled in the art can understand that the present disclosure intends to cover various reasonable changes, improvements and modifications of the embodiments. These changes, improvements and modifications are intended to be proposed in this application and are within the spirit and scope of the exemplary embodiments of this application.

In addition, some specific terms in this application have been used to describe the embodiments of this application. For example, "one embodiment", "an embodiment" and/or "some embodiments" mean that a specific feature, structure, or characteristic described in combination with the embodiment may be included in at least one embodiment of the present application. Therefore, it can be emphasized and should be understood that two or more references to "an embodiment" or "one embodiment" or "an alternative embodiment" in various parts of this specification do not necessarily all refer to the same embodiment. In addition, specific feature, structure, or characteristic may be appropriately combined in one or more embodiments of the present application.

It should be understood that in the foregoing description of the embodiments of the present application, to help understand a feature, and for the purpose of simplifying the present application, the present application sometimes combines various features in a single embodiment, a drawing, or description thereof. However, this does not mean that the combination of these features is necessary. It is entirely possible for those skilled in the art to mark some of the devices as a single embodiment for understanding when reading this application. In other words, the embodiments in this application can also be understood as an integration of multiple sub-embodiments. The content of each sub-embodiment is also true when it is less than all the characteristics of a single previously disclosed embodiment.

Each patent, patent application, publication of patent applications, and other materials referenced in this application, such as articles, books, specifications, publications, documents, articles, etc., except for any historical litigation documents related thereto, any identical historical litigation documents that may be inconsistent or conflicting with this application, or any identical historical litigation documents that may have a restrictive effect on the widest scope of the claims may be incorporated herein by reference and used for all purposes now or in the future associated with this application. In addition, if the description, definition, and/or use of terms in any associated materials contained herein is inconsistent with or in conflict with that in this document, the terms in this document shall prevail.

Finally, it should be understood that the embodiment of the application disclosed herein is an explanation of the principle of the embodiment of the application. Other modified embodiments are also within the scope of this application. Therefore, the embodiments disclosed in this application are merely examples rather than limitations. Those skilled in the art can adopt alternative configurations according to the embodiments of the present application to implement the disclosure in this application. Therefore, the embodiments of this application are not limited to those exactly described in the application.

## Claims

1. A scooter, comprising:
a front wheel assembly and a rear wheel assembly;
a body rotatably connected with the front wheel assembly and the rear wheel assembly and including a deck, a support part, and a seat tube; and
a seat assembly including a seat, wherein
the support part is connected with the deck and protrudes from the deck,
the seat tube is connected with the support part and the seat assembly,
the deck includes a bearing surface for a driver to put the feet thereon, and
the seat assembly and the support surface form a space that allows the driver to always have at least one foot under the seat when the driver sits or stands on the bearing surface to drive the scooter.

2. The scooter according to claim 1, wherein
the support part is tilted from the bearing surface in an obliquely backward direction relative to the scooter.

3. The scooter according to claim 2, wherein the support part includes a connecting surface; and
the seat tube is connected with the connecting surface, and when the scooter is placed horizontally, the seat tube extends from the connecting surface in a forward and upward direction relative to the scooter.

4. The scooter according to claim 3, wherein an obtuse angle is formed between the connecting surface and the bearing surface such that the connecting surface is oriented in the forward and upward direction relative to the scooter when the scooter is placed horizontally.

5. The scooter according to claim 3 or 4, wherein
an instantly detachable structure is disposed on the connecting surface, and the seat tube is connected with the connecting surface by the instantly detachable structure; or
the connecting surface is integrally molded with the seat tube.

6. The scooter according to any one of claims 1 to 5, wherein the seat assembly includes a seat post connected with the seat and the seat tube;
the seat includes a front portion;
the front portion is located in front of the seat post and above the bearing surface; and
a ratio of a projection length of the front portion on the bearing surface to a length of the bearing surface along a length direction of the bearing surface is 0.2 to 0.4.

7. The scooter according to claim 6, wherein
the seat tube has a mounting hole having an opening oriented in a backward and upward direction relative to the scooter, and the seat post is at least partially disposed in the mounting hole.

8. The scooter according to claim 7, wherein
the seat tube comprises a seat tube body, a mounting tube and a fixing member;
the mounting hole is located on the seat tube body, a lower end of the mounting tube is located in the mounting hole, and a portion between an upper end and the lower end of the mounting tube is clamped between the fixing member and the seat tube body; and
the fixing member is connected to the seat tube body by screws, thereby fixing the mounting tube to the seat tube body.

9. The scooter according to claim 7, wherein
the seat post further includes a locking element;
the locking element is disposed at the opening of the mounting hole, and the seat post is detachably fixed in the mounting hole to allow the driver to adjust a height of the seat.

10. The scooter according to any one of claims 1 to 5, wherein
the seat assembly includes a seat post connected with the seat and the seat tube; and
the seat includes a rear portion located behind the seat post, and a mounting space for disposing an accessory of the scooter is formed between the rear portion and the seat tube.

11. The scooter according to claim 10, wherein
the accessory includes a storage member at least partially located within the mounting space.

12. The scooter according to claim 11, wherein
the storage member includes a sidewall and a bottom;
the seat tube is connected with the sidewall, and the support part is connected with the bottom to support the storage member.

13. The scooter according to claim 12, wherein the support part includes a support surface;
the support surface is horizontal when the scooter is placed horizontally; and
the support part is connected with the bottom by the support surface.

14. The scooter according to claim 13, wherein
a limiting groove is formed in the sidewall, and the seat tube is at least partially located within the limiting groove.

15. The scooter according to claim 14, wherein
a first connecting hole communicating with the limiting groove is formed in the sidewall, and a second connecting hole is formed in a portion of the seat tube located within the limiting groove; the scooter includes an externally threaded element passing through the first connecting hole and the second connecting hole to connect the storage member and the seat tube.
